# EUROPEAN PATENT APPLICATION

(11) **EP 3 196 827 A1**
(43) Date of publication of application: **26.07.2017**
(21) Application number: 16201890.7
(22) Date of filing: 02.12.2016
(51) Int. Cl.: G06Q 30/06

(54) **DISTRIBUTION OF LICENSES FOR A THIRD-PARTY SERVICE OPERATING IN ASSOCIATION WITH A LICENSED FIRST-PARTY SERVICE**

(30) Priority: 21.01.2016 US 201615003058
(71) Applicant: BlackBerry Limited, Waterloo, ON N2K 0A7 (CA)
(72) Inventor: SMITH, Andrew Christopher, Ancaster, Ontario L9G 1E7 (CA); DIKIC, Srdan, Waterloo, Ontario N2K 0A7 (CA); CHIU, Julio Gilberto, Mississauga, Ontario L4W 5P1 (CA); DAMARAJU, Sandeep, Bellevue, WA 98008 (US); KOTAPALI, Kafeelurrahman, Mississauga, Ontario L4W 5P1 (CA); BOZSITZ, Calin Marius, Waterloo, Ontario N2K 0A7 (CA); VAFIADES, Nicholas James, Waterloo, Ontario N2K 0A7 (CA); MADEJ, Piotr, Mississauga, Ontario L4W 5P1 (CA); PETRONIJEVIC, Dejan, Mississauga, Ontario L4W 5P1 (CA)
(74) Representative: Hanna Moore + Curley

(57) **Abstract**

A first-party vendor provides a licensed first-party service on one or more electronic devices, the first-party service associated with a licensed third-party service provided by a third-party vendor on the electronic devices. A cloud service of the first-party vendor may host one or more third-party license keys that are securely accessible to the first-party service, each third-party license key pointing to a corresponding global third-party license issued by the third-party vendor for access to the third-party service on the electronic devices. In some examples, distribution of a third-party license key to a particular device may be based on a current affinity of that device to a particular third-party license type, as determined from a mapping agreed upon by the first-party and third-party vendors between one or more types of first-party licenses and one or more types of third-party license, and from the first-party license type currently associated with the device.

## Description

### Background

A vendor may offer a service, such as an application, a function, or the like, to one or more customers, where the service may be accessible via one or more electronic devices associated with each customer, provided the customer has been issued a license for access to the service. Where the service is offered directly by the vendor, the vendor may be referred to as a first-party vendor, the service may be referred to as a first-party service, and the license may be referred to as a first-party license.

In some cases, the first-party service offered by the first-party vendor may be associated with another service provided by another vendor. For example, a first-party service offered by a first-party vendor may leverage, rely on, employ, operate in conjunction with or be associated in some other way with a third-party service provided by a third-party vendor. Access to the third-party service may require a third-party license issued by the third-party vendor. In some examples, in order for the first-party vendor to allow a customer to access the first-party service (in association with the third-party service), the first-party vendor may be required to pay royalties to the third-party vendor.

### Summary

Accordingly there is provided a method, an electronic device and a computer program as detailed in each of the independent claims. Advantageous features are in the dependent claims.

### Brief Description of the Drawings

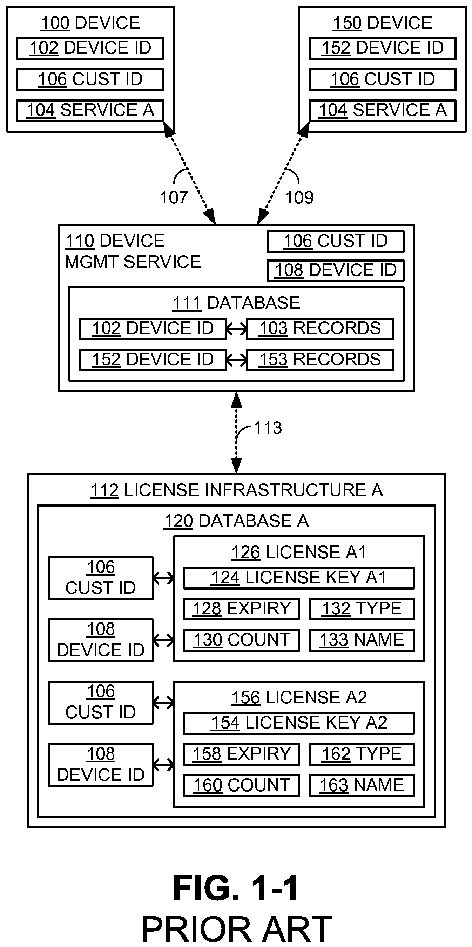

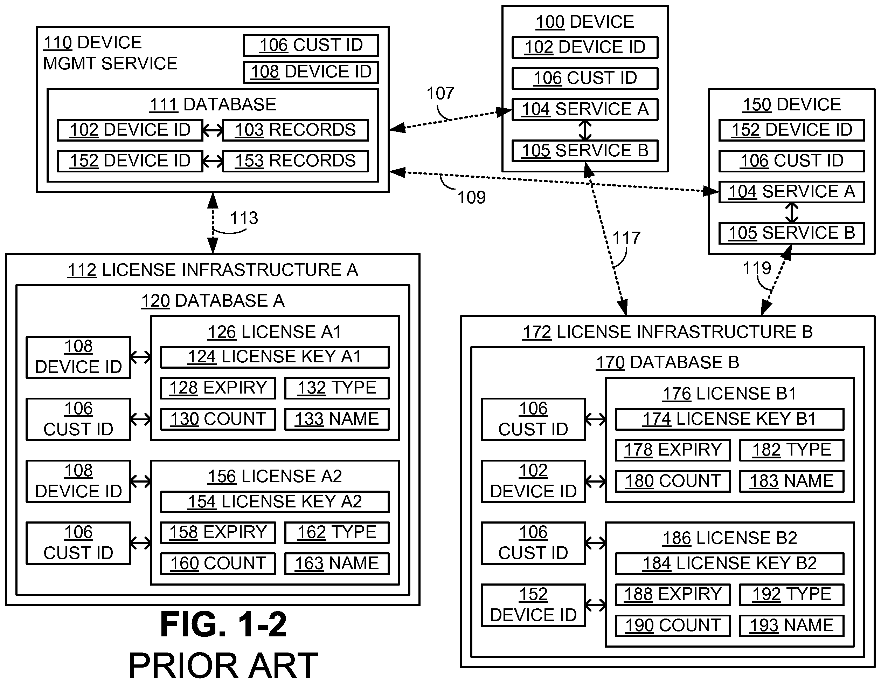

Figure 1-1 illustrates a schematic diagram showing a plurality of customer devices accessing a first-party service provided by a first-party vendor , in accordance with an example of the prior art;
Figure 1-2 illustrates a schematic diagram showing a plurality of customer devices accessing a first-party service that is associated with third-party service, where the first-party service is provided by a first-party vendor and the third-party service is provided by a third-party vendor, in accordance with an example of the prior art;
Figure 2 illustrates a schematic diagram showing a plurality of customer devices accessing a first-party service that is associated with third-party service, where the first-party service is provided by a first-party vendor and the third-party service is provided by a third-party vendor, in accordance with a first example of the proposed technology;
Figure 3 illustrates methods associated with acquisition of a third-party license key, in accordance with the first example of the proposed technology illustrated schematically in Figure 2;
Figure 4 illustrates methods associated with a third-party license key change, in accordance with the first example of the proposed technology illustrated schematically in Figure 2;
Figure 5 illustrates a schematic diagram showing a plurality of customer devices accessing a first-party service that is associated with third-party service, where the first-party service is provided by a first-party vendor and the third-party service is provided by a third-party vendor, in accordance with a second example of the proposed technology;
Figure 6 illustrates methods associated with acquisition of a third-party license key, in accordance with the second example of the proposed technology illustrated schematically in Figure 5;
Figure 7 illustrates methods associated with a third-party license key change, in accordance with the second example of the proposed technology illustrated schematically in Figure 5;
Figure 8 illustrates methods associated with a change in affinity of a customer device to a new type of third-party license, in accordance with the second example of the proposed technology illustrated schematically in Figure 5; and
Figure 9 illustrates a block diagram of an example electronic device in accordance with examples of the proposed technology.

### Detailed Description

A vendor may offer a service to one or more customers. Examples of services include software applications, such as Microsoft® Windows, Microsoft® Word, BlackBerry® Enterprise Service (BES), anti-virus applications such as Norton® 360, modeling applications, and the like. The service may be accessible via one or more electronic devices associated with each customer, hereinafter referred to as customer devices. The service may comprise local software installed on a customer device to provide a service to that device. Alternatively or additionally, the service may comprise software installed at a customer site, a remote service provided on the Internet, or some other form. Examples of customer devices include desktop computers, laptops, mobile electronic devices, tablets, and the like. Access to the service at a given customer device may require that the associated customer has been issued a license for the service.

A license may comprise various attributes, including, for example, a license key, an expiry date, a type, a count, and a name. A license key may also be referred to as a token, a product key, an activation key, or an activation code. The license key may be considered as a pointer to the license itself, and may comprise, for example, an alphanumeric code. In exchange for being issued a license to access the service, a customer may be required to make a payment to the vendor and/or to agree to one or more terms specified in an End User License Agreement (EULA), which may provide a legal framework for licensed use of the service.

Typically, a license infrastructure of the vendor may maintain a database comprising issued licenses and customer identifiers (IDs) identifying the customers to which the licenses have been issued. The database may also store device IDs identifying the customer devices that are accessing the service. Examples of device IDs may include identifiers that are derived from the device hardware or more broadly associated with the device, such as an International Mobile Equipment Identity (IMEI), a Media Access Control (MAC) address, a Globally Unique Identifier (GUID), a Personal Identification Number (PIN), or an identifier of a subscriber identity module (SIM) of the device, including, for example, an International Mobile Subscriber Identity (IMSI), an integrated circuit card identifier (ICCID), and the like.

In some examples, a plurality of customer devices may be managed by a device management service. The device management service may communicate with the license infrastructure on behalf of the customer devices and may handle license activation. The customer devices and the associated device management service are associated with the same customer ID, whereas each customer device managed by the device management service is associated with a different device ID. In addition, the device management service itself is associated with an identifier. Thus, the term "device ID" may be used herein to refer to an identifier of a customer device (that may be managed by a device management service), and/or to an identifier of a device management service (that may manage one or more customer devices). In other examples, each customer device may communicate directly with the license infrastructure, without the involvement of a device management service.

At the time of issuance of a license to a customer, a customer ID associated with the customer may be stored in the database of the license infrastructure in association with the issued first-party license. A single customer ID may be associated with a plurality of different licenses. However, no two customer IDs may be associated with the same first-party license.

In order for a particular customer device to access the service, the customer may be required to provide to the license infrastructure a device ID and either the license key pointing to the requested license, or one or more credentials associated with the customer ID. In the case where license activation is handled by a device management service, the device ID may be associated with the device management service. Upon validation of the license key or the credentials, and upon determining that the license should be activated for the particular customer device, the license infrastructure may then associate the device ID with the customer ID and with the license issued to that customer.

Figure 1-1 illustrates a schematic diagram showing an example license infrastructure A 112 of a first-party vendor that provides a first-party service A 104, and two example customer devices 100 and 150 accessing the first-party service A 104, in accordance with an example of the prior art. The customer devices 100 and 150 are associated with device IDs 102 and 152, respectively.

The first-party service A 104 is illustrated as software installed at each one of the customer devices 100 and 150. However, the first-party service A 104 may comprise alternative and/or additional forms, such as software installed at a customer site, a remote service provided on the Internet, or some other form.

In this example, the customer devices 100 and 150 are associated with the same customer ID 106, and license activation at the customer devices 100 and 150 is managed by a device management service 110, which may be installed, for example, at a customer site. The customer devices 100 and 150 may, in some examples, be in possession of the customer ID 106. The device management service 110 is associated with a device ID 108. The first-party service A 104 on the customer devices 100 and 150 is in communication with the device management service 110, as shown by arrows 107 and 109, respectively. The device management service 110 is in communication with the first-party license infrastructure A 112, as shown by arrow 113. The device management service 110 may comprise a database 111 which stores records regarding the respective use of the first-party service A 104 at each of the customer devices managed by the device management service 110. For example, the device ID 102 may be stored in association with records 103 indicative of particular features of the first-party service A 104 being used at the device 100. Similarly, the device ID 152 may be stored in association with records 153 indicative of particular features of the first-party service A 104 being used at the device 150.

In an alternative example (not shown), the first-party service A 104 may communicate directly with the first-party license infrastructure A 112, without the involvement of a device management service.

In the example of Figure 1-1, a database A 120 of the license infrastructure A 112 stores two different first-party licenses: a first-party license A1 126 and a first-party license A2 156. The first-party license A1 126 may have attributes including a license key A1 124, an expiry date 128, a count 130, a type 132 and a name 133, while the first-party license A2 156 may have attributes including a license key A2 154, an expiry date 158, a count 160, a type 162 and a name 163. Examples of license keys, such as the license keys A1 124 and A2 154, include alphanumeric codes such as NUS4T-GKF2R-17SCB-4CKPN. Examples of expiry dates, such as the expiry dates 128 and 158, include Dec-25-2015, Jan-28-2016, and the like. Examples of counts, such as the counts 130 and 160, include 10, 50, 100, and the like. Examples of names, such as the names 133 and 163, include "gold", "platinum", and the like. Examples of types, such as the types 132 and 162, include "subscription", "perpetual", "site", "Early Partner Release (EPR)", "trial", "activation", and the like. A subscription-type license may have an expiry date, whereas a perpetual type license may not. A trial-type license may be similar to a subscription-type license, but may be short in duration. An EPR-type license may be for a select group of customers that are to evaluate beta software, for example. A site-type license may allow a customer to use as much of a service as they want for a flat fee. An activation-type license may be associated with a special key that is used only temporarily at the time of initial activation of a customer device, and may be replaced at a later time. The type 132 may or may not differ from the type 162. Although not explicitly illustrated, each one of the types 132 and 162 may comprise a sub-type that further specifies characteristics of the respective license.

In the example of Figure 1-1, the customer identified by the customer ID 106 has been issued both the first-party license A1 126 and the first-party license A2 156, as denoted by the association between these licenses and the customer ID 106 in the database A 120.

License reconciliation is a process whereby licenses that have been issued to a customer for access to a service at one or more of the customer's devices are reconciled with the actual use of the service at the customer devices. License reconciliation may take place locally, for example, at a device management service installed at a customer site or, in the absence of a device management service, at the customer devices themselves. Alternatively, license reconciliation may take place within the license infrastructure of the first-party vendor that is offering the first-party service. License reconciliation may be performed periodically, for example, once every 24 hours. Alternatively or additionally, license reconciliation may be performed in response to one or more triggers, such as license purchases, changes in terms of licenses, use of service features as reported by customer devices, and the like.

In one example, where license reconciliation takes place within the device management service 110, the device management service 110 may periodically synchronize to the database 111 information about licenses from the database A 120 of the first-party license infrastructure A 112, including the first-party licenses A1 126 and A2 156 that are associated with the customer ID 106. In order to obtain the first-party licenses A1 126 and A2 156, the customer may be required to provide to the first-party license infrastructure A 112 information including the first-party license keys A1 124 and A2 154 and/or one or more credentials associated with the customer ID 106 or credentials associated with the device management service 110. In some examples, the customer may be required to use credentials associated with the customer ID 106 in order to obtain credentials for the device management service 110. The first-party license keys A1 124 and A2 154 and/or the credentials may be provided, for example, via an administrative console of the device management service 110, and sent to the first-party license infrastructure A 112 for validation. The credentials may comprise, for example, the customer ID 106 itself, or a username and password associated with the customer ID 106, or some other credentials associated with the customer identified by the customer ID 106. The device ID 108 associated with the device management service 110 may also be sent to the first-party license infrastructure A 112. Upon validation of the first-party license keys A1 124 and A2 154 (or the credentials), the first-party license infrastructure A 112 may store the device ID 108 in the database A 120, in association with the first-party licenses A1 124 and A2 154, and the first-party licenses A1 124 and A2 254 (or a subset of the total count thereof) may be made available to the device management service 110 for distribution to customer devices that it manages. Thus, if a particular customer device, such as the device 100, requests access to the first-party service A 104, the device management service 110 may proceed by comparing the first-party licenses A1 126 and A2 156 received from the first-party license infrastructure A 112 to the current records 103 and 153 showing current use of the first-party service A 104 by customer devices, in order to determine license consumption and availability. Based on the outcome of this comparison, the device management service 110 may determine whether or not the request from the device 100 for access to the first-party service A 104 should be granted or denied. For example, if the most recent license reconciliation at the device management service 110 shows that a license is still available for the type of access being requested by the device 100, then the device management service 110 may provide the requested access to the device 100. Although not explicitly shown, in some examples the first-party license infrastructure A 112 may periodically receive reports from the device management service 110 that include the device IDs 102 and 152 and the specific first-party licenses and/or features/services currently associated with those IDs.

In another example, where license reconciliation takes places within the first-party license infrastructure A 112, the customer may be required to provide one or more credentials associated with the customer ID 106, for validation by the license infrastructure A 112. The credentials may be provided, for example, via an administrative console of the device management service 110. License reconciliation may involve the device management service 110 periodically sending reports to the first-party license infrastructure A 112 that include the records 103 and 153. Alternatively, the device management service 110 may send information about features in use at the time that use of the first-party service A 104 is granted, instead of sending information based on database records. The device management service 110 may also send to the license infrastructure A 112 the device IDs 102 and 152 associated with the records 103 and 153. The first-party license infrastructure A 112 may periodically compare the received records 103 and 153 to the first-party licenses A1 126 and A2 156 to determine license consumption and availability. The first-party license infrastructure A 112 may provide the outcome of the comparison to the device management service 110, for example, by exposing an application programming interface (API) to the device management service 110 (not shown).

The manner in which first-party licenses are distributed to the various devices associated with the customer ID 106 may be determined from the outcome of the most recent license reconciliation. For example, if the counts 130 and 160 of the first-party licenses A1 126 and A2 156 are both 1000, and if the device management service 110 determines from the most recent license reconciliation that there are already 1000 devices associated with the first-party license A1 126, but only 500 devices associated with the first-party license A2 156, then the device management service 110 may determine that the next customer device that requests access to the first-party service A 104 should be associated with the first-party license A2 156 (and not the first-party license A1 126, which is currently unavailable).

In those examples not involving a device management service (not shown), any first-party license keys or credentials required for validation may be provided directly at the customer devices. For example, an e-mail comprising a first-party license key may be sent to a customer device, and a user of the customer device may then manually enter the received first-party license key into a user interface associated with the first-party service A 104. The first-party license key may be sent to the license infrastructure A 112 for validation. Upon validation, the customer device may be provided with access to the first-party service A 104.

As previously noted, a first-party service offered by a first-party vendor may leverage, rely on, employ, operate in conjunction with or be associated in some other way with a third-party service offered by a third-party vendor.

Figure 1-2 illustrates a schematic diagram of an example scenario in which the first-party service A 104 described in Figure 1-1 is associated with a third-party service B 105 that is provided by a third-party vendor, in accordance with an example of the prior art. According to traditional methods, access to this type of first-party service (which is associated with a third-party service) may require the issuance and activation of both a first-party license and a third-party license.

For example, in order for the customer device 100 to access the first-party service A 104, which is associated with the third-party service B 105, it may be necessary for the customer device 100 to possess an activated first-party license, such as the first-party license A1 126, as well as an activated third-party license.

In the example of Figure 1-2, the third-party service B 105 is illustrated as software installed at each one of the customer devices 100 and 150, and the third-party service B 105 communicates directly with a third-party license infrastructure B 172, as denoted by arrows 117 and 119. Although not explicitly shown, the third-party service B 105 may comprise alternative and/or additional forms, such as software installed at a customer site, a remote service provided on the Internet, or some other form. The third-party license infrastructure B 172 comprises a database B 170 which stores two different third-party licenses: a third-party license B1 176 and a third-party license B2 186. The third-party license B1 176 may have attributes including a license key B1 174, an expiry date 178, a count 180, a type 182 and a name 183, while the third-party license B2 186 may have attributes including a license key B2 184, an expiry date 188, a count 190, a type 192 and a name 193. Each of the types 182 and 192 may include a sub-type (not shown).

In the example of Figure 1-2, the customer identified by the customer ID 106 has been issued both the third-party license B1 176 and the third-party license B2 186, as denoted by the association between these licenses and the customer ID 106 in the database B 170.

When a customer device, such as the customer device 100, seeks to access the first-party service A 104, the associated third-party service B 105 may be required to provide to the third-party license infrastructure B 172 the device ID 102, and either the license key of the third-party license for which activation is sought, or credentials associated with the customer ID 106. In one example, the third-party license key, such as the key B1 174, may have been previously provided to the customer device 100, for example, in an e-mail. A user of the customer device 100 may then manually enter the received third-party license key B1 174 into a user interface associated with the third-party service B 105. In another example (not shown), the third-party license key B1 174 may have been entered in an administrative console of the device management service 110, and subsequently distributed to the customer device 100. In either case, the customer device 100 may send to the third-party license infrastructure B 172 a request for activation of the third-party license B1 176 for the device ID 102, where the activation request includes the third-party license key B1 174.

Upon validation of the third-party license key B1 174 by the third-party license infrastructure B 172, the customer device 100 may be provided with access to the third-party service B 105. The device ID 102 may be stored in the database B 170 in association with the customer ID 106 and with the third-party license B1 176.

The above procedures for issuance and activation of third-party licenses are traditionally required in addition to similar procedures for issuance and activation of first-party licenses, as described previously. Issuance and activation of the licenses may be more generally referred to as license distribution.

Distribution of multiple licenses in order to provide access to a single service (e.g., a first-party service associated with a third-party service) may be cumbersome. Furthermore, synchronization problems may arise if the attributes of the licenses (such as the expiry date, the count, the type, etc.) do not align or are incompatible. For example, in the event that a customer device is issued a first-party license and a third-party license, and in the event that the third-party license expires before the first-party license, access to the first-party service may be interrupted at the customer device. In another example, the first-party vendor may pay royalties to the third-party vendor based on the issuance of a third-party license having a particular count. However, in the event that the particular count of the third-party license is greater than the count of the first-party license issued by the first-party vendor, then not all instances of the third-party licenses will be usable, in which case the first-party vendor may be overpaying to some extent. In yet another example, in the event that the type of the third-party license differs from the type of the first-party license, the extent of access to the first-party service may be unclear, and, depending on how the royalties are charged by the third-party vendor, the first-party vendor may be overpaying or underpaying to some extent.

These and other problems may be addressed by the technology proposed herein.

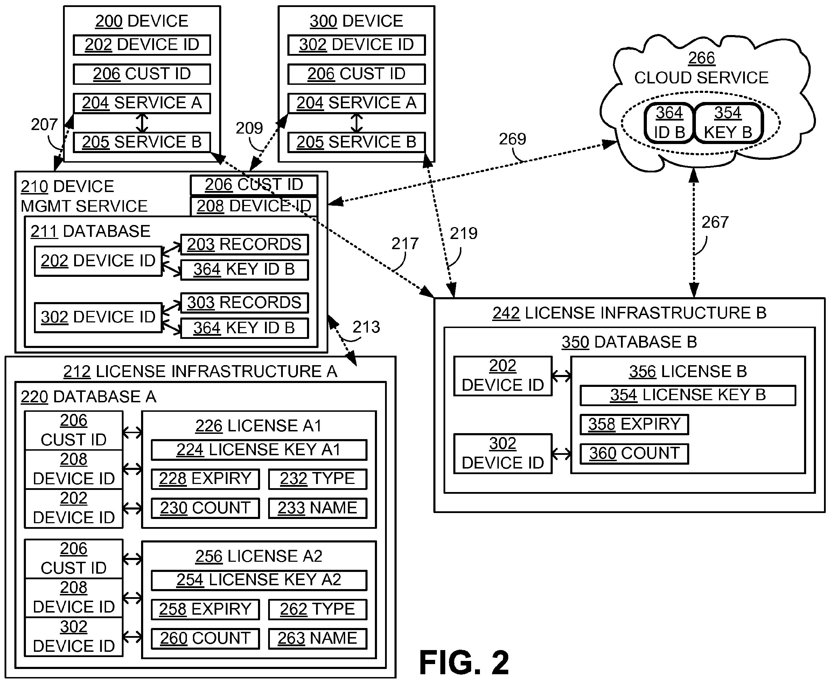

Figure 2 illustrates a schematic diagram showing an example license infrastructure A 212 of a first-party vendor that provides a first-party service A 204, an example license infrastructure B 242 of a third-party vendor that provides a third-party service B 205, and two example customer devices 200 and 300 seeking to access the first-party service A 204 and the third-party service B 205, where the first-party service A 204 is associated with the third-party service B 205, in accordance with a first example of the proposed technology. The customer devices 200 and 300 are associated with the device IDs 202 and 302, respectively.

The first-party service A 204 and the third-party service B 205 are illustrated as software installed at each one of the customer devices 200 and 300. However, the first-party service A 204 and/or the third-party service B 205 may comprise alternative and/or additional forms, such as software installed at a customer site, a remote service provided on the Internet, or some other form.

In the example of Figure 2, the customer devices 200 and 300 are associated with a single customer, identified by a customer ID 206, and first-party license activation at the customer devices 200 and 300 is managed by a device management service 210, which may be installed, for example, at a customer site. The device management service 210 is associated with a device ID 208. The first-party service A 204 on the customer devices 200 and 300 is in communication with the device management service 210, as shown by arrows 207 and 209, respectively. The device management service 210 is in communication with the first-party license infrastructure A 212, as shown by arrow 213. The device management service 210 may comprise a database 211 which stores records regarding the respective use of the first-party service A 204 at each of the customer devices managed by the device management service 210. For example, the device ID 202 may be stored in association with records 203 indicative of particular features of the first-party service A 204 being used at the device 200. Similarly, the device ID 302 may be stored in association with records 303 indicative of particular features of the first-party service A 204 being used at the device 300.

In an alternative example (not shown), the first-party service A 204 on each of the customer devices 200 and 300 may communicate directly with the first-party license infrastructure A 212, without the involvement of a device management service.

In the example of Figure 2, a database A 220 of the first-party license infrastructure A 212 stores two different first-party licenses: a first-party license A1 226 and a first-party license A2 256. The first-party license A1 226 may have attributes including a license key A1 224, an expiry date 228, a count 230, a type 232 and a name 233, while the first-party license A2 256 may have attributes including a license key A2 254, an expiry date 258, a count 260, a type 262 and a name 263. Examples of the license keys A1 224 and A2 254, the expiry dates 228 and 258, the counts 230 and 260, and the types 232 and 262 are similar to the examples described with respect to Figure 1-1. Each of the types 232 and 262 may include a sub-type. In the example of Figure 2, the type 232 differs from the type 262.

In this example of the proposed technology, the customer identified by the customer ID 206 has been issued both the first-party license A1 226 and the first-party license A2 256, as denoted by the association between these licenses and the customer ID 206 in the database A 220.

Where first-party license reconciliation takes place within the device management service 210, the device management service 210 may periodically synchronize to the database 211 license information from the database A 220 of the first-party license infrastructure A 212, including the first-party licenses A1 226 and A2 256 that are associated with the customer ID 206. In order to obtain the first-party licenses A1 226 and A2256, the customer may be required to provide to the first-party license infrastructure A 212 information including the first-party license keys A1 224 and A2 254 and/or one or more credentials associated with the customer ID 206. The information may be provided, for example, via an administrative console of the device management service 210. The credentials may comprise, for example, the customer ID 206 itself, or a username and password associated with the customer ID 206, or some other credentials associated with the customer identified by the customer ID 206. The device ID 208 associated with the device management service 110 may also be sent to the first-party license infrastructure A 212. Upon validation of the first-party license keys A1 224 and A2 254 (or the credentials), the first-party license infrastructure A 212 may store the device ID 208 in the database A 220, in association with the first-party licenses A1 224 and A2 254, and the first-party licenses A1 224 and A2 254 may be made available to the device management service 210 for distribution to customer devices that it manages. Thus, if a particular customer device, such as the device 200, requests access to the first-party service A 204, the device management service 210 may proceed by comparing the first-party licenses A1 226 and A2 256 received from the first-party license infrastructure A 212 to the current records 203 and 303 showing current use of the first-party service A 204 by customer devices, in order to determine license consumption and availability. Based on the outcome of this comparison, the device management service 210 may determine whether or not the request from the device 200 for access to the first-party service A 204 should be granted or denied. For example, if the most recent license reconciliation at the device management service 210 shows that a license is still available for the type of access being requested by the device 200, then the device management service 210 may provide the requested access to the device 200. In the example of Figure 2, the first-party license infrastructure A 212 periodically receives reports from the device management service 210 that include the device IDs 202 and 302 and the specific first-party licenses currently associated with those IDs.

Where license reconciliation takes places within the first-party license infrastructure A 212, the customer may be required to provide one or more credentials associated with the customer ID 206 for validation by the license infrastructure A 212. The credentials may be provided, for example, via an administrative console of the device management service 210. License reconciliation may involve the device management service 210 periodically sending reports to the first-party license infrastructure A 212 that include the records 203 and 303. Alternatively, the device management service 210 may send information about features in use at the time that use of the first-party service A 204 is granted, instead of sending information based on database records. The device management service 210 may also send to the license infrastructure A 212 the device IDs 202 and 302 associated with the records 203 and 303. The first-party license infrastructure A 212 may periodically compare the received records 203 and 303 to the first-party licenses A1 226 and A2 256 to determine license consumption and availability. The first-party license infrastructure A 212 may provide the outcome of the comparison to the device management service 210, for example, by exposing an API to the device management service 110 (not shown).

As described with respect to Figure 1-1, the manner in which first-party licenses are distributed to the various devices associated with the customer ID 206 may be determined from the outcome of the most recent license reconciliation.

In those examples not involving a device management service (not shown), any first-party license keys or credentials required for validation may be provided directly at the customer devices. For example, an e-mail comprising a first-party license key may be sent to a customer device, and a user of the customer device may then manually enter the received first-party license key into a user interface associated with the first-party service A 204. The first-party license key may be sent to the license infrastructure A 212 for validation.

The first-party service A 204 leverages, relies on, employs, operates in conjunction with or is associated in some other way with the third-party service B 205. The third-party service B 205 is illustrated in Figure 2 as communicating directly with the third-party license infrastructure B 242, as denoted by arrows 217 and 219. The third-party license infrastructure B 242 comprises a database B 350 that is able to store at least one third-party license, as will be described in more detail below.

In accordance with an example of the proposed technology, the first-party vendor may establish an agreement with the third-party vendor whereby: (1) the third-party vendor is to create a global third-party license, the "global" designation being based on specific attributes defined for the third-party license, as described in more detail below; and (2) the third-party vendor is to make available to the first-party service A 204 a third-party license key that points to the global third-party license. Figure 2 illustrates a global third-party license B 356 in accordance with an example of the proposed technology.

With respect to item (1): Similarly to the first-party licenses A1 226 and A2 256, the third-party license B 356 may have attributes including an expiry date 358 and a count 360. Importantly, however, in the case of the third-party license B 356, the count 360 may be very high, unlimited or unspecified/uncounted. For example, depending on an anticipated number of customer devices expected to access the first-party service A 204 (and thus the associated third-party service B 205), the count 360 may be set to a value of 500,000, for example. Alternatively, the third-party vendor could support setting the count 360 to value indicating that the count 360 is unlimited. The third-party vendor could increase or decrease the count 360 as needed. In one example, the count 360 of the third-party license B 356 may be set to a value that is higher than a sum of the counts of all first-party licenses available for issuance by the first-party vendor. This would include the counts 230 and 260 of the first-party licenses A1 226 and A2 256 issued to the customer identified by the customer ID 206, in addition to the counts of all other first-party licenses available for issuance by the first-party vendor (including first-party licenses to be issued to other customers). In this example, the number of customer devices, such as the devices 200 and 300, that are able to access the first-party service A 204 (and thus the third-party service B 204) will depend on the counts 230 and 260 of the first-party licenses A1 226 and A2 256, respectively, because the count 360 of the third-party license B 356 is set to a higher value than the total count of first-party licenses.

In addition to the count 360 of the third-party license B 356 being very high, unlimited or unspecified/uncounted, the expiry date 358 may be distant in the future or unspecified. For example, the expiry date 358 may be set to a value that is 25 years in the future. Alternatively, the expiry date 358 may be unspecified (for example, missing entirely from the attributes of the third-party license B 356, or set to some explicit value indicating that there is no expiry date). In one example, the expiry date 358 of the third-party license B 356 may be set to a date that is further in the future than the expiry date of any first-party license available for issuance by the first-party vendor (including first-party licenses to be issued to other customers). In this example, the period of time over which customer devices, such as the devices 200 and 300, are able to access the first-party service A 204 (and thus the third-party service B 205) would depend on the expiry dates 228 and 258 of the first-party licenses A1 226 and A2 256, respectively, because the expiry date 358 of the third-party license B 356 is set to a date further in the future than either one of the first-party licenses.

Although not explicitly illustrated, the third-party license B 356 may have other attributes, such as a type, a name, and the like. However, the minimal requirements for the attributes of the third-party license B 356, in accordance with the proposed technology, are: (i) the count 360 having a high, unlimited or unspecified value (or, at a minimum, a value that is higher than a total count of all first-party licenses available for issuance by the first-party vendor); and (ii) the expiry date 358 being distant in the future or unspecified (or, at a minimum, a date that is further in the future than any expiry date of a first-party license available for issuance by the first-party vendor). By satisfying requirements (i) and (ii), the third-party license B 356 may effectively be considered a "global" license that is always available and can be used by all customers seeking to access the first-party service A 204 (and the associated third-party service B 205). For example, the third-party license B 356 will not impose additional restrictions on access to the first-party service A 204 (and the third-party service B 205 associated therewith) beyond the restrictions established by the first-party licenses A1 226 and A2 256. Thus, access to the first-party service A 204 (and thus the third-party service B 205) may be governed by the terms of the first-party licenses A1 226 and A2 256.

With respect to item (2): The third-party license key B 354, which is an attribute of the third-party license B 356 that acts as a pointer thereto, may be made available to the first-party service A 204 on each of the customer devices 200 and 300, via the device management service 210, by having the third-party license key B 354 hosted in a cloud service 266 associated with the first-party vendor. In an alternative example (not shown), the third-party vendor could expose a web service with which the customer devices 200 and 300, or the device management service 210, could communicate directly to obtain the third-party license key B 354. This alternative may involve a secure authentication between the first-party vendor and the third-party web service.

The third-party license key B 354 may be securely stored in the cloud service 266 in association with a license key ID B 364, which may be defined by the first-party vendor in order to identify the third-party license key B 354. Communication between the third-party license infrastructure B 242 and the cloud service 266 is illustrated by arrow 267. Communication between the device management service 210 and the cloud service 266 is illustrated by arrow 269.

In an alternative example (not shown), in which there is no device management service handling license activation for customer devices, each customer device may communicate directly with the cloud service 266.

According to the example of Figure 2, a single global third-party license may be issued to a plurality of customers, and activated for a plurality of customer devices. This is in contrast to the prior art example of Figure 1-2, in which each customer may be issued a different third-party license. In the example of Figure 2, it is notable that the type 232 of the first-party license A1 226 that is issued to the device 200 differs from the type 262 of the first-party license A2 256 that is issued to the device 300. However, the same global third-party license B 356 is issued to both devices 200 and 300. Accordingly, this example of the proposed technology may be referred to as the "single-key" approach.

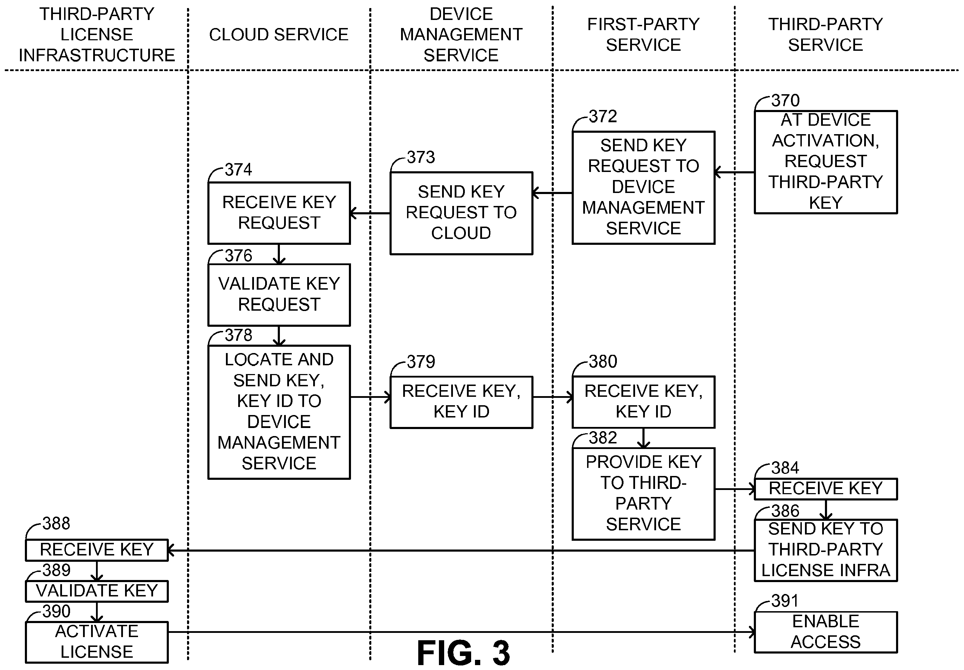

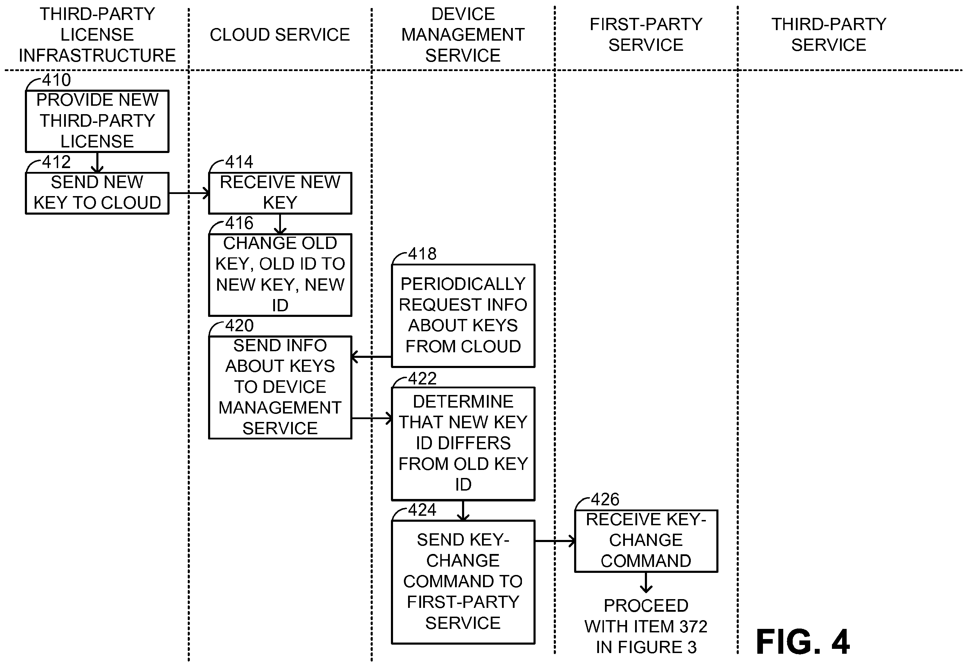

Because the count 360 and the expiry date 358 of the third-party license B 356 are set to high, unlimited or unspecified values, it may be of interest to the third-party vendor to ensure the security of the third-party license key B 354, both while it is stored in the cloud service 266 and when it is being obtained by the customer devices 200 and 300. Maintaining security of the third-party license key B 354 may reduce the risk of massive fraudulent use of the third-party service B 205. Techniques for maintaining security of the third-party license key B 354 will be discussed further with respect to Figures 3 and 4.

Figure 3 illustrates example methods associated with acquisition of a third-party license key in accordance with the single-key approach of the proposed technology.

At some point, the first-party service A 204 on a customer device, such as the device 200, may send a request to the device management service 210 for a third-party license key, as shown at 372. In one example, such a request may be sent in response to a request from the third-party service B 205 on the device 200 at the time of device activation, as shown at 370. In another example, such a request may be sent in response to a command received from the device management service 210, as will be described with respect to Figure 4. The request may comprise a device certificate indicating a public key of the device 200.

In response to receiving a key request from the first-party service A 204, the device management service 210 may send a key request to the cloud service 266, as shown at 373. The device management service 210 may have previously authenticated itself to the cloud service 266 using, for example, a challenge response authentication. Following receipt of the key request at 374, the cloud service 266 may validate the request using the device certificate, as shown at 376. Following validation of the request, the cloud service 266 may locate a third-party license key to provide to the first-party service A 204, such as the third-party license key B 354. The third-party license key B 354 may be stored in the cloud service 266 in an encrypted form. The cloud service 266 may respond to the device management service 210 by providing the third-party license key B 354 and the corresponding license key ID B 364, as shown at 378 and 379. Although not explicitly illustrated, the cloud service 266 may encrypt the third-party license key B 354 using the public key of the device 200, such that it can only be decrypted once it is received by the device 200 using the corresponding private key of the device 200. Thus, the device management service 210 may pass the encrypted third-party license key B 354 to the first-party service A 204 on the device 200 without being privy to its value. The first-party service A 204 may provide the third-party license key B 354 to the third-party service B 205, as shown at 384. In turn, the third-party service B 205 may send the third-party license key B 354 to the third-party license infrastructure B 242, as shown at 386. The third-party license key B 354 may be sent together with the device ID 202.

Upon receipt of the third-party license key B 354 at 388, the third-party license infrastructure 242 may validate the third-party license key B 354, as shown at 389. In the event that the third-party license key B 354 is validated, the third-party license infrastructure 242 may proceed to activate the corresponding third-party license B 356 for the device ID 202, as shown at 390. Activation of the third-party license B 356 for the device ID 202 may then enable the device 200 to access the third-party service B 205, as shown at 391. In one example, the third-party license infrastructure 242 may send a message to the device 200, where the message causes the third-party service B 205 to become accessible at the device 200.

Once a third-party license has been activated for a particular device, the third-party license infrastructure B 242 may store in the database B 350 the device ID in association with the global third-party license that has been activated for that device. In addition, the device management service 210 may store in the database 211 the third-party license key ID in association with the device ID for which the third-party license has been activated. For example, in Figure 2, the global third-party license B 356 has been activated for the customer devices 200 and 300. Accordingly, the database B 350 stores the device IDs 202 and 302 in association with the global third-party license B 356, while the database 211 stores the license key ID B 364 in association with each of the device IDs 202 and 302.

Figure 4 illustrates example methods associated with a third-party license key change in accordance with the single-key approach of the proposed technology.

As noted in the description of Figure 3, the first-party service A 204 at a particular customer device, such as the device 200, may request a third-party license key in response to a command received from the device management service 210. The device management service 210 may send such a command, for example, if there has been a change in the third-party license key B 354 that is stored in the cloud service 266. Such a change may occur, for example, if it has been determined that the current value of the third-party license key B 354 has been compromised.

In the event that the current value of the third-party license key B 354 has been compromised, the third-party license infrastructure B 242 may provide a new third-party license for use by the first-party vendor, as shown at 410 in Figure 4. The third-party vendor may take measures to curb fraudulent use of the previous value of the third-party license key B 354, for example, by preventing use of the key by any new devices. The third-party license infrastructure B 242 may send the new value of the third-party license key B 354 to the cloud service 266, as shown at 412 and 414. This could be done formally, for example, using a secure web service interface, or informally between the first-party vendor and the third-party vendor. Following receipt of the new value of the third-party license key B 354, the cloud service 266 may change the previous values of the third-party license key B 354 and the third-party license key ID B 364 that are stored in therein, as shown at 416.

The device management service 210 may determine that the change in third-party license key B 354 has taken place by periodically requesting information from the cloud service 266 about the third-party license key B 354 stored therein, as shown at 418. In one example, such a request may be sent once every 24 hours. In response, the cloud service 266 may provide information about the third-party license key B 354, as shown at 420. The device management service 210, upon receipt of this information, may compare it to information in the database 211 to determine whether there has been a key change, as shown at 422. For example, the device management service 210 may send a request to the cloud service 266 at 418 for the latest information stored in the cloud service 266 about the third-party license key. The cloud service 266 may return the latest information about the third-party license key stored therein, as shown at 420, including the value of the third-party license key ID 364. If the device management service 210 determines, at 422, that the value of the third-party license key ID 364 received from the cloud service 266 differs from the value of the third-party license key ID 364 that is stored in the database 211, then the license key ID B 364 stored in the database 211 may be marked as "invalid", thereby indicating that the devices 200 and 300 having the IDs 202 and 302, respectively, should be updated with a new third-party license key B 354. The device management service 210 may then cause a key-change command to be sent to the affected devices 200 and 300, as shown at 424.

Upon receipt of a key-change command from the device management service 210, as shown at 426, the first-party service A 204 at the affected device(s) may send a request to the cloud service 266 for the current global third-party license key B 354. The request may be sent via the device management service 210. This corresponds to item 372 in Figure 3. From this point onward, the methods may proceed as illustrated in Figure 3.

In an alternative example (not shown), in response to determining at 422 that the value of the third-party license key ID 364 has changed, the device management service 210 may cause the current global third-party license key B 354 to be sent from the cloud service 266 to the devices 200 and 300, without requiring a key-change command to be sent to the devices 200 and 300. For example, the device management service 210, being aware of a particular key marked as "invalid", may determine which devices are associated with the invalid key. The device management service 210 may communicate with those devices directly to instruct them to request a new third-party license key.

Once the first-party service A 204 has received a new value for the license key B 454 and once the corresponding third-party license B 356 has been activated for the devices 200 and 300, the first-party service A 204 may inform the device management service 210 of this, and the device management service 210 may update the database 211 to indicate that the device IDs 202 and 302 are now associated with a new third-party license key ID 364.

According to the single-key approach, the same global third-party license B 356 is used for all customers, regardless of the type of first-party license being used by those customers. While the third-party license infrastructure B 242 maintains a record of which devices IDs are associated with the global third-party license B 356, the third-party vendor may have no direct knowledge of what type of first-party license has been activated for a given device in order to allow that device to use the global third-party license B 356. Without this information, the third-party vendor may be unable to independently determine whether the first-party vendor is paying sufficient royalties for use of the third-party service B 205. As previously noted, due to the global nature of the third-party license B 356, access to the first-party service A 204 (and thus the third-party service B 205) at a particular device is effectively governed by the terms of the first-party license for that device. Thus, one might consider a scenario in which the type 232 of the first-party license A1 226 being used by the customer device 200 is "subscription", whereas the type 262 of the first-party license A2 256 being used by the customer device 300 is "perpetual". The access to the first-party service A 204 (and thus the third-party service B 205) that is permitted with a perpetual-type license may be more extensive than the access that is permitted with a subscription-type license. Thus, the third-party vendor may wish to charge the first-party vendor a higher royalty for the instance of the global third-party license B 356 that is activated for the device 300 than for the instance of the global third-party license B 356 that is activated for the device 200.

According to the single-key approach, the third-party vendor may determine how different instances of the global third-party license B 356 are being used by relying on information provided by the first-party vendor. For example, using the records 203 and 303 associated with the device IDs 202 and 302, respectively, and the first-party licenses issued to the customer, the first-party vendor may perform license reconciliation at the device management service 210 to determine the type of first-party license associated with each of the devices 200 and 300. The device management service 210 may periodically send reports to the first-party license infrastructure A 212 that include information regarding the type of first-party license that is currently associated with each device ID. The first-party license infrastructure A 212 may collect that information and periodically send it to the third-party vendor. Alternatively, where reconciliation is performed within the first-party license infrastructure A 212, the device management service 210 may send information to the first-party license infrastructure A 212 about the feature use associated with each device ID. The first-party license infrastructure A 212 may use that information to determine which first-party license type is currently associated with each device ID, and may periodically generate and send reports to the third-party vendor, where the reports indicate the device IDs and the types of first-party license with which those devices are currently associated. Based on these reports, the third-party vendor may calculate royalties owed by the first-party vendor for use of the third-party service B 205.

For example, for each of the device IDs 202 and 302 associated with the global third-party license B 356 in the database B 350, the first-party license infrastructure A 212 may provide to the third-party license infrastructure B 242 information regarding the types 232 and 262 of the corresponding first-party licenses A1 226 and A2 256 that are associated with the device IDs 202 and 302 in the database A 220. Based on the types 232 and 262, the third-party vendor may determine how each instance of the global third-party license B 356 is being used by devices 200 and 300, and thus how much to charge the first-party vendor in royalties. Thus, in the example above, the third-party vendor may determine that the royalties charged to the first-party vendor should be higher for the instance of the third-party license B 356 that is associated with the device ID 302, than for the instance of the third-party license B 356 that is associated with the device ID 202. In other words, for each instance of global third-party license issued to a device, the third-party vendor may determine an expected royalty based on the type of the corresponding first-party license issued to that device. It should be noted that the method used by the third-party vendor for calculating expected royalties need not correspond with the method used by the first-party vendor. For example, the first-party vendor may determine that it should charge different licensing fees for devices that are issued trial-type first-party licenses than for devices that are issued site-type first-party licenses. The third-party vendor may instead determine that the expected royalties for third-party licenses issued to those devices should be the same, regardless of whether the first-party licenses are trial-type or site-type. Alternatively, the first-party vendor may determine that it should charge the same licensing fees for the two license types, whereas the third-party vendor may determine that the expected royalties for third-party licenses should differ depending on whether the corresponding first-party licenses are trial-type or site-type.

As previously described, the device management service 210 may periodically send information, such as the records 203 and 303, to the first-party license infrastructure A 212 regarding how the first-party service A 204 (and thus the third-party service B 205) is being used at the devices 200 and 300. In other words, the first-party vendor may be provided with information regarding which device IDs are accessing the third-party service B 205. These device IDs may be compared to the device IDs that are reported to the third-party vendor in order to determine whether the third-party license key is being used fraudulently by any devices. In the event that the third-party vendor determines that the third-party license key is being used fraudulently by a particular device, access to the third-party service B 205 may be disabled at the particular device. For example, in the event that the device 300 is determined to have fraudulently used the third-party license key B 354 to access the third-party service B 205, the third-party license infrastructure B 242 may indicate in the database B 350 that the device ID 302 is not authorized to access the third-party service B 205. Alternatively or additionally, the third-party vendor may inform the first-party vendor of the discrepancy and seek additional royalties to account for the discrepancy.

In the single-key approach, the third-party vendor may rely on information obtained from the first-party vendor to determine how the global third-party license is being used, and thus how much to charge the first-party vendor in royalties. However, it may be of interest to the third-party vendor to be able to monitor, via direct communication with the customer devices that are using the third-party service, how the third-party service is being used at those devices. As previously described, due to the global nature of the third-party license, access to the first-party service (and thus the third-party service) at a given customer device is effectively governed by the terms of the first-party license used by that device. Accordingly, it may be possible to monitor how a customer device is using the third-party service by monitoring the type of first-party license that is activated for that device. In order to monitor a plurality of different types of first-party licenses, the third-party vendor may create a plurality of different types of global third-party licenses and make the associated third-party license keys available to the first-party service. That is, instead of providing a single third-party license key pointing to a global third-party license having no specified type, as described in the single-key approach, there may be provided a plurality of global third-party license keys, each one pointing to a different global third-party license having a different specified type. That is, the type of each global third-party license is unique within the plurality of global third-party licenses provided by the third-party vendor. This technique may be referred to as a "multi-key" approach. For simplicity, the type of license that is pointed to by a given license key may also be referred to as the "key type".

According to the multi-key approach, a given customer device may be determined to have an affinity for a particular type of global third-party license, depending on (i) a type of first-party license issued thereto, and (ii) a mapping between types of third-party licenses and types of first-party licenses. The mapping between each type of global third-party license and each type of first-party license may or may not be 1:1. By issuing global third-party licenses with specified types, the third-party vendor may directly monitor the quantity of each global third-party license in use. Accordingly, the third-party vendor may independently determine how much to charge the first-party vendor in royalties, without relying on records obtained from the first-party vendor.

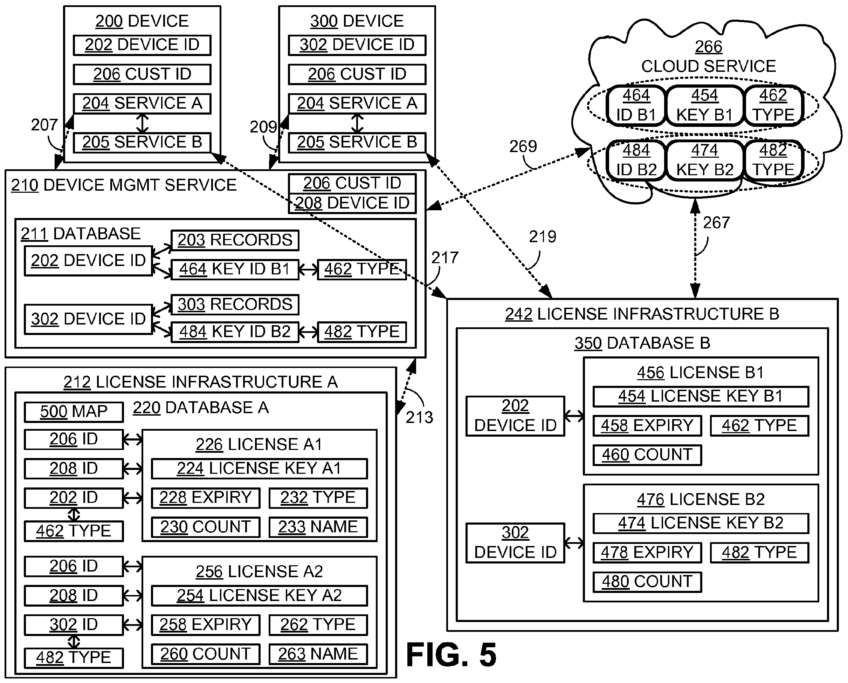

Figure 5 illustrates a schematic diagram showing an example license infrastructure A 212 of a first-party vendor that provides a first-party service A 204, and example license infrastructure B 242 of a third-party vendor that provides a third-party service B 205, and two example customer devices 200 and 300 seeking to access the first-party service A 204 and the third-party service B 205, where the first-party service A 204 is associated with the third-party service B 205, in accordance with an example of the multi-key approach of the proposed technology.

In the example of Figure 5, the first party vendor may establish an agreement with the third-party vendor whereby: (1) the third-party vendor is to create a plurality of global third-party licenses, each one having a different specified type; and (2) the third-party vendor is to make available to the first-party service A 204 a corresponding plurality of third-party license keys, where each third-party license key points to a different one of the global third-party licenses. In the example of Figure 5, the database B 350 of the license infrastructure B 242 stores two global third-party licenses B1 456 and B2 476. The global third-party license B1 456 may have attributes including a license key B1 454, an expiry date 458, a count 460, and a type 462, while the global third-party license B2 476 may have attributes including a license key B2 474, an expiry date 478, a count 480, and a type 482.

With respect to item (1): As described with respect to the single-key approach, in the multi-key approach, the counts 460 and 480 may be very high, unlimited or unspecified/uncounted and the expiry dates 458 and 478 may be distant in the future or unspecified. However, in contrast to the single-key approach, the attributes of the global third-party license B1 456 and the global third-party license B2 476 each specify a license type, where the type 462 of the global third-party license B1 456 differs from the type 482 of the global third-party license B2 476. Although not explicitly illustrated, each of the types 462 and 482 may comprise a sub-type that further specifies characteristics of the respective license.

Although not explicitly illustrated, the global third-party licenses B1 456 and B2 476 may have other attributes, such as names. However, the minimal requirements for the global third-party licenses B1 456 and B2 476, in accordance with the proposed technology, are: (i) the counts 460 and 480 having high, unlimited or unspecified values; (ii) the expiry dates 458 and 478 being distant in the future or unspecified; and (iii) the specified types 462 and 482. By satisfying these requirements, the third-party licenses B1 456 and B2 476 may effectively be considered "global" licenses of the types 462 and 482, respectively.

With respect to item (2): The third-party license keys B1 454 and B2 474, and their respective types 462 and 482, may be made available to the first-party service A 204 on each of the customer devices 200 and 300, via the device management service 210, by having the third-party license keys B1 454 and B2 474 hosted in the cloud service 266 associated with the first-party vendor. The third-party license key B1 454 and the type 462 may be securely stored in the cloud service 266 in association with a license key ID B1 464. Similarly, the third-party license key B2 474 and the type 482 may be securely stored in the cloud service 266 in association with a license key ID B2 484. The license key IDs B1 464 and B2 484 may be defined by the first-party vendor in order to identify the third-party license keys B1 454 and B2 474, respectively.

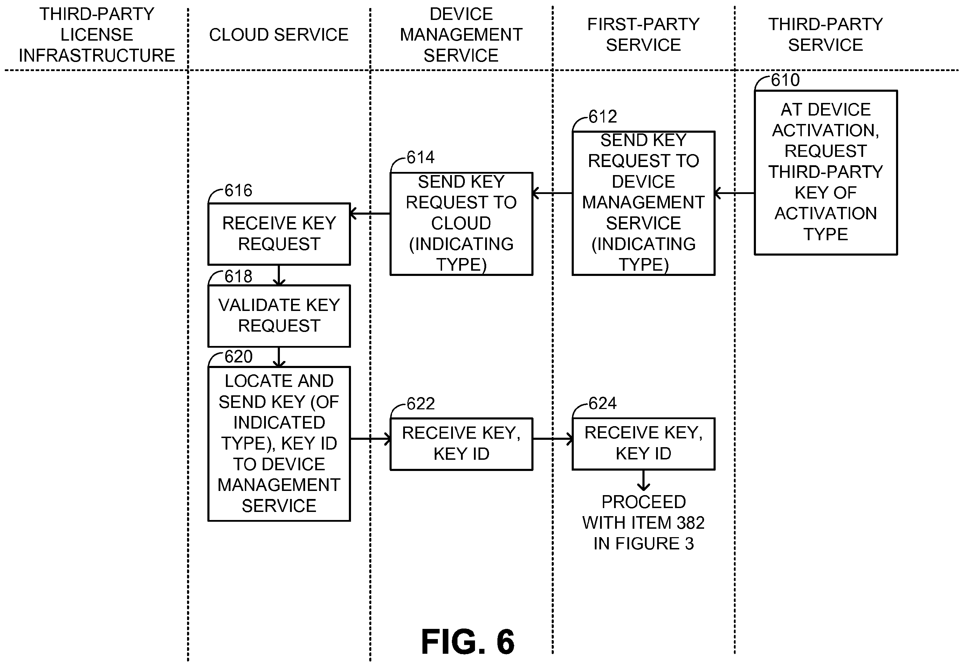

Because the counts 460 and 480 and the expiry dates 458 and 478 of the global third-party licenses B1 456 and B2 476 are set to high, unlimited or unspecified values, it may be of interest to the third-party vendor to ensure the security of the third-party license keys B1 454 and B2 474, both while they are stored in the cloud service 266 and when they are being obtained by the customer devices 200 and 300. Maintaining security of the third-party license keys B1 454 and B2 474 may reduce the risk of massive fraudulent use of the third-party service B 205. Techniques for maintaining security of the third-party license keys B1 454 and B2 474 will be discussed further with respect to Figures 6, 7 and 8.

In contrast to the single-key approach, in which the third-party vendor must rely on reports from the first-party vendor to determine how the third-party service B 205 is being used by the customer devices 200 and 300, the multi-key approach allows the third-party vendor to obtain this information directly from the customer devices 200 and 300. This is because each global third-party license has a specified type, and the first-party vendor and third-party vendor have agreed on a specific mapping between first-party license types and third-party license types. Thus, the multi-key approach may permit the third-party vendor to maintain an accurate record on its end of third-party license use by type. The third-party vendor may use this information, for example, to determine how much to charge the first-party vendor in royalties.

Figure 6 illustrates methods associated with acquisition of a third-party license key in accordance with the multi-key approach of the proposed technology.

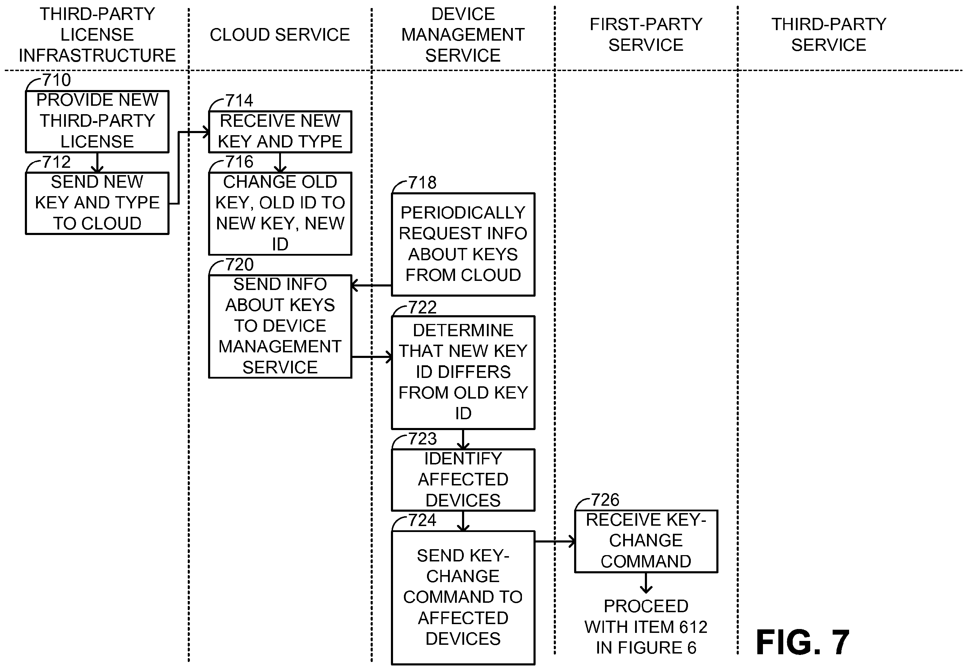

At some point, the first-party service A 204 on a customer device, such as the device 200, may send a request to the device management service 210 for a third-party license key that points to a third-party license of a particular type, as shown at 612. In one example, such a request may be sent in response to a request from the third-party service B 205 on the device 200 at the time of device activation. In this case, the key type that is indicated in the request may be specified as an "activation" key type, and may be intended for temporary use. In another example, a request for a third-party license key may be sent in response to a command received from the device management service 210, as will be described with respect to Figure 7.

As described with respect to the single-key approach, the request may comprise a device certificate indicating a public key of the device 200. In response to receiving the key request from the first-party service A 204, the device management service 210 may send a key request to the cloud service 266, as shown at 614. Again, the key request may include an indication of the key type that is requested. The device management service 210 may have previously authenticated itself to the cloud service 266 using, for example, a challenge response authentication. Following receipt of the key request at 616, the cloud service 266 may validate the request using the device certificate, as shown at 618. Following validation of the request, the cloud service 266 may locate a third-party license key having the type indicated in the request, such as the third-party license key B1 454 having the type 462. The third-party license key B1 454 may be stored in the cloud service 266 in an encrypted form. The cloud service 266 may then respond to the device management service 210 by providing the third-party license key B1 454 and the corresponding license key ID B1 464, as shown at 620 and 622. Although not explicitly illustrated, the cloud service 266 may encrypt the third-party license key B1 454 using the public key of the device 200, such that it can only be decrypted once it is received by the device 200 using the corresponding private key of the device 200. Thus, the device management service 210 may pass the encrypted third-party license key B1 454 to the first-party service A 204 on the device 200 without being privy to its value. Upon receipt of the third-party license key B1 454 and the corresponding license key ID B1 464, as shown at 620, the first-party service A 204 may provide the third-party license key B1 454 to the third-party service B 205. This corresponds to item 382 in Figure 3. From this point onward, the methods may proceed as illustrated in Figure 3.

In the event that the third-party license key that is provided to a customer device points to a global third-party license of the "activation" type, the third-party license key may only be enabled for temporary use. A subsequent determination may be made as to which type of global third-party license should be issued to the device. This determination may be based on an affinity of the device to a particular type of global third-party license, which may be determined through the process of license reconciliation.

"Affinity" is a quality associated with each customer device seeking to access a first-party service that is associated with a third-party service. Affinity may be used to determine which type of third-party license key should be provided to a particular customer device. For example, if the device 200 has an affinity to a global third-party license of the type 462, then the device 200 may be provided with the third-party license key B1 454 that points to the global third-party license B1 456, since this license has the type 462 satisfying the affinity. An "affinity" of a particular device to a particular license type may also be referred to as an association, a correspondence, an assignment or the like.

According to the proposed technology, a customer device's affinity to a third-party license type may be determined based on: (i) the type of the first-party license that is being used by that device; and (ii) an association defined between that type of first-party license and a type of third-party license. The association may be defined in a mapping between one or more first-party license types and one or more third-party license types, where the mapping may be specified in the agreement between the first-party vendor and third-party vendor. The mapping may be defined by whichever entity is responsible for the license reconciliation. For example, where the license reconciliation is performed at the license infrastructure A 212, the mapping may be stored within the database A 220, as shown by item 500 in Figure 5. Alternatively, where the license reconciliation is performed at the device management software 210, the mapping may be stored within the database 211 (not shown).

The mapping between first-party license type(s) and third-party license type(s) may or may not be 1:1. One may consider a generic example in which there are five types of first-party licenses, denoted: A, B, C, D, E, while there are only three types of third-party licenses, denoted: X, Y, Z. The first-party vendor and the third-party vendor may agree, for example, on the mapping illustrated in Table 1:

**Table 1**

| **First-party license type** | **Third-party license type** |
|---|---|
| A | X |
| B | Y |
| C | Y |
| D | Y |
| E | Z |

According to the example mapping of Table 1, any customer device that is using a first-party license of type A would have an affinity to a third-party license of type X. On the other hand, any customer device that is using a first-party license of type B, C or D would have an affinity to a third-party license of type Y. And finally, any customer device that is using a first-party license of type E would have an affinity to a third-party license of type Z. Thus, when determining which type of third-party license key is to be provided to a customer device, the affinity of the customer device to a third-party license type is determined based on the type of first-party license being used by that customer device and the mapping agreed on by the first-party and third-party vendors.

As previously noted, the manner in which first-party licenses are distributed to various devices may be determined from the outcome of the most recent license reconciliation. Therefore, the affinity or association of a customer device ID to a type of third-party license may be periodically updated as a result of license reconciliation. For example, with reference to Table 1, in the event that the device management service 210 is responsible for performing the license reconciliation, the device management service 210 may determine, upon reconciliation, that the first-party license type for a particular device has changed from type C to type A. The device management service 210 may then use the mapping in Table 1 to determine that the affinity of the particular device to a third-party license type has changed from type Y to type X. In response to this determination, the device management service 210 may send a key-change command to the first-party service A 204 on the particular device, where the key-change command instructs the first-party service A 204 to request a new third-party license key of the type X. Alternatively, in the event that the license infrastructure A 212 is responsible for performing the license reconciliation, the license infrastructure A 212 may determine, upon reconciliation, that the first-party license type for a particular device has changed from type C to type A. The license infrastructure A 212 may then use the mapping in Table 1 to determine that the affinity of the particular device to a third-party license type has changed from type Y to type X. In one example, in response to the determination, the license infrastructure A 212 may indicate to the device management service 210 that there has been an affinity change for one of its devices, without necessarily indicating the nature of the change or the affected device. In response to the indication, the device management service 210 may send a request to the license infrastructure A 212 for current license information stored in the database A 220. The device management service 210 may then compare the current license information received from the license infrastructure A 212 to its own records stored in the database 211 in order to determine the nature of the affinity change and the affected device. In another example, in response to determining that the affinity of a particular device to a third-party license type has changed, the license infrastructure A 212 may provide to the device management service 210 an indication of the nature of the affinity change and the affected device. Upon determining the nature of the affinity change and the affected device, the device management service 210 may send a key-change command to the first-party service A 204 on the device, where the key-change command instructs the first-party service A 204 to request a new third-party license key of the type X.

Figure 7 illustrates example methods associated with a third-party license key change in accordance with the multi-key approach of the proposed technology.

As noted in the description of Figure 6, the first-party service A 204 at a particular customer device, such as the device 200, may request a global third-party license key in response to a command received from the device management service 210. The device management service 210 may send such a command, for example, if there has been a change in the third-party license key B1 454 that is stored in the cloud service 266. Such a change may occur, for example, if it has been determined that the current value of the third-party license key B1 454 has been compromised.

In the event that the current value of the third-party license key B1 454 has been compromised, the third-party license infrastructure B 242 may provide a new third-party license of the same type 462 for use by the first-party vendor, as shown at 710 in Figure 7. The third-party vendor may take measures to curb fraudulent use of the previous value of the third-party license key B1 454, for example, by preventing use of the key by any new devices. The third-party vendor license infrastructure B 242 may send the new value of the third-party license key B1 454 and the type 462 to the cloud service 266, as shown at 712 and 714. This could be done formally, for example, using a secure web service interface, or informally between the first-party vendor and the third-party vendor. Following receipt of the new value of the third-party license key B1 454, the cloud service 266 may change the previous values of the third-party license key B1 454 and the third-party license key ID B1 464 that are stored in therein, as shown at 716. The type 462 may be used to locate the particular third-party license key and third-party license key ID to change.

Similarly to the single-key approach, the device management service 210 may determine that the change in third-party license key B1 454 has taken place by periodically requesting information from the cloud service 266 about the third-party license key(s) stored therein, as shown at 718. In one example, such a request may be sent once every 24 hours. In response, the cloud service 266 may provide information about the third-party license key(s), including the key B1 454, as shown at 720. The device management service 210, upon receipt of this information, may compare it to information in the database 211 to determine whether there has been a key change, as shown at 722. For example, the device management service 210 may send a request to the cloud service 266 at 718 for the latest information stored in the cloud service 266 about the third-party license keys. The cloud service 266 may return the latest information about the keys stored therein, as shown at 720, including the values of the third-party license key IDs B1 464 and B2 484. Upon comparing the latest information from the cloud service 266 to the information in the database 211, the device management service 210 may determine that there has been a change in one or more of the third-party license keys. For example, as shown at 722, the device management service 210 may determine that the value of the third-party license key ID B1 464 that is associated with the type 462 and received from the cloud service 266 differs from the value of the third-party license key ID B1 464 that is associated with the type 462 and that is stored in the database 220. In response to this determination, the device management service 210 may mark the third-party license key ID B1 464 stored in the database 211 as "invalid". At 723, the device management service 210 may determine which are the affected devices that should be updated with a new third-party license key B1 454. In this case, the device management service 210 may determine that the customer device 200 having the ID 202 should be updated with a new third-party license key B1 454. The device management service 210 may then send a key-change command to the affected devices, as shown at 724. In one example, this may be done according to a batch process. For example, the device management service 210 may periodically query for devices having a third-party license key ID marked as "invalid". A key-change command may be sent to the affected devices identified in response to the query, where the key-change command instructs each device to obtain a new, valid third-party license key.

It should be noted that, in contrast to the single-key approach, the key-change command sent at 724 may comprise an indication of the type of third-party license key that the first-party service A 204 should request for the device 200, based on the current affinity of the device.

Upon receipt of the key-change command from the device management service 210, as shown at 726, the first-party service A 204 may send a key request to the device management service 210, for subsequent transmission to cloud service 266, where the key request may include an indication of which type of third-party license key should be included in the response. This corresponds to item 612 in Figure 6. From this point onward, the methods may proceed as illustrated in Figure 6. In an alternative example, when queuing a key-change command to be sent to a given device, the device management service 210 may track the type of key that should be provided to that device, such that, when a key request is subsequently received from that device, the device management service 210 need only look up the appropriate type in the database 211.

In those examples which do not involve a device management service, it is contemplated that customer devices could send key requests directly to the cloud service 266.

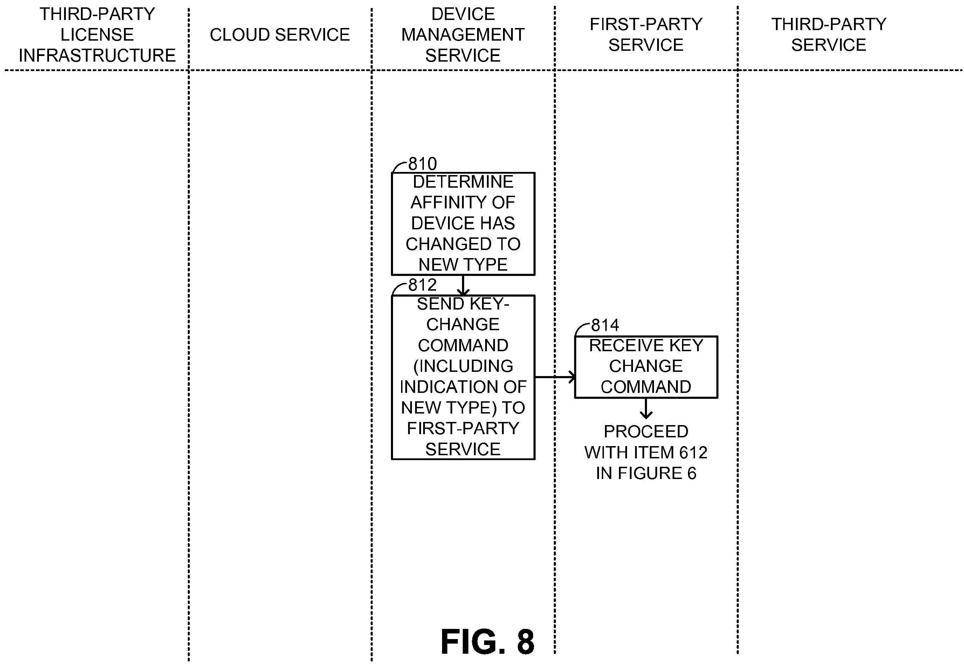

Figure 8 illustrates example methods associated with a change in an affinity of a customer device to a new type of third-party license, in accordance with the multi-key approach of the proposed technology.

In the multi-key approach, following license reconciliation at the license infrastructure A 212 or the device management service 210, it may be determined that the affinity of a particular customer device, such as the device 200, to a type of third-party license has changed. This is shown at 810 in Figure 8. In one example, the device 200, which previously had an affinity to the third-party license type 462 may have a new affinity to the third-party license type 482.

In response to this determination, the device management service 210 may send a key-change command to the first-party service A 204 instructing the customer device 200 to request a new third-party license key of the type indicated in the new affinity, as shown at 812. Upon receipt of the key-change command from the device management service 210, as shown at 814, the first-party service A 204 may send a request to the device management service 210 for a third-party license key that points to a third-party license of the type indicated in the key-change command. This corresponds to item 612 in Figure 6. From this point onward, the methods may proceed as illustrated in Figure 6.

In the multi-key approach, the first-party vendor may report to the third-party vendor information about which device IDs are associated with which first-party license types and third-party license types. This information may allow the third-party vendor to monitor for fraudulent use of global third-party license keys. For example, the third-party vendor may compare the device IDs that are reported by the first-party vendor to the device IDs that are stored in the database B 350. If, for example, the device ID 202 is present in the database B 350 in association with the global third-party license B1 456, but the device ID 202 is not reported by the first-party vendor, then the third-party vendor may determine that the global third-party license key B1 454 is being fraudulently used by the device 200. In one example, the third-party vendor may respond to this determination by disabling the first-party service A 204 on the device 200. For example, the third-party license infrastructure B 242 may indicate in the database B 350 that the ID 202 is not authorized to access the third-party service B 205. Alternatively or additionally, the third-party vendor may inform the first-party vendor of the discrepancy and seek additional royalties to account for the discrepancy. In another example, the third-party vendor may determine that, while the device ID 202 is present in the database B 350 in association with the global third-party license B1 456, the first-party vendor is reporting the device ID 202 as being associated with the third-party license type 482. The third-party vendor may conclude from this that the third-party license B1 456 (having the type 462) should not be activated for the customer device 200, and that, instead, the third-party license B2 476 (having the type 482) should be activated for the customer device 200. The third-party vendor could respond to this determination, for example, by informing the first-party vendor of the discrepancy, and, if appropriate, seeking additional royalties to account for any difference in cost between a third-party license of type 462 and a third-party license of 482.

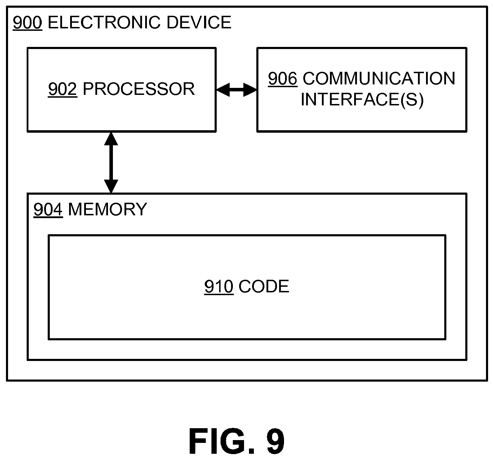

Figure 9 is a block diagram of an example electronic device 900. The device 900 may contain other elements which, for clarity, are not shown in Figure 9.

The device 900 is an example of the customer device 200 or the customer device 300. Additionally, the device 900 may represent an example of the one or more electronic devices that are involved in the methods performed by any one of the device management service 210, the first-party license infrastructure A 212, the license infrastructure B 242 and the cloud service 266.

The device 900 comprises a processor 902 which is coupled to a memory 904 and to one or more communication interfaces 906 through which it is operable to communicate with one or more other electronic devices.

The communication interfaces 906 may comprise one or more wired communication interfaces, wireless communication interfaces or both. For example, the one or more communication interfaces 906 may comprise any of a Universal Serial Bus (USB) interface, an Ethernet interface, an Integrated Services Digital Network (ISDN) interface, a Digital Subscriber Line (DSL) interface, a Local Area Network (LAN) interface, a High-Definition Multimedia (HDMI) interface, a Digital Visual Interface (DVI), or an Institute of Electrical and Electronics Engineers (IEEE) 1394 interface such as an i.LINK™, Lynx^{SM} or Firewire® interface. Alternatively or additionally, the one or more communication interfaces 906 may comprise any of a Wireless Local Area Network (WLAN) interface, a short-range wireless communication interface such as a Wireless Personal Area Network (WPAN) interface, a Wireless Wide Area Network (WWAN) interface, or a Wireless Metropolitan Area Network (WMAN) interface. The communication interfaces 906 are adapted to enable the communications between the devices 200 and 300, the device management service 210, the license infrastructure A 212, the license infrastructure B 242 and the cloud service 266, as illustrated at 207, 209, 213, 217, 219, 267, and 269 in Figures 2 and 5.

The memory 904 may be operable to store computer-executable code 910 that, when executed by the processor 902, results in one or more of the methods described herein.

The memory 904 may store additional information, depending on whether the device 900 is an example of a customer device, or a device involved in performing the functions of a device management service, or a device involved in performing the methods of a license infrastructure, or a device involved in performing the methods of a cloud service.

For example, where the device 900 is an example of the customer device 200 or 300, the memory 904 may comprise the first-party service A 204 and the associated third-party service B 205, and the code 910 may comprise instructions that result in the methods performed by the first-party service A 204 and the third-party service B 205 as described with reference to of any one of Figures 2 to 8.

In another example, where the device 900 is involved in the actions performed by the device management service 210, the memory 904 may comprise the database 211, and the code 910 may comprise instructions that result in the methods performed by the device management service 210 as described with reference to of any one of Figures 2 to 8.

In another example, where the device 900 is involved in the actions performed by the license infrastructure A 212 (or the license infrastructure B 242), the memory 904 may comprise the database A 220 (or the database B 350), and the code 910 may comprise instructions that result in the methods performed by the license infrastructure A 212 (or the license infrastructure B 242) as described with reference to of any one of Figures 2 to 8.

In yet another example, where the device 900 is involved in the actions performed by the cloud service 266, the memory may comprise third-party license keys and their associated license key IDs (and optionally key types, in the case of the multi-key approach), and the code 910 may comprise instructions that result in the methods performed by the cloud service 266 as described with reference to of any one of Figures 2 to 8.

## Claims

1. A method performed by a first-party vendor, the first-party vendor providing a licensed first-party service on one or more electronic devices, the first-party service being associated with a licensed third-party service provided by a third-party vendor on the one or more electronic devices, the method comprising:
hosting in a cloud service of the first-party vendor one or more third-party license keys, each third-party license key pointing to a corresponding global third-party license issued by the third-party vendor for access to the third-party service on one or more of the electronic devices, and each global third-party license having attributes comprising: (i) an expiry date that is unspecified or later than an expiry date of any first-party license available for issuance by the first-party vendor, and (ii) a count that is unlimited or higher than a count of all first-party licenses available for issuance by the first-party vendor; and
making the third-party license keys securely accessible to the first-party service.

2. The method of claim 1, wherein the one or more third-party license keys comprise a plurality of third-party license keys, and wherein the attributes of each global third-party license further comprise (iii) a license type that is unique within the plurality of global third-party licenses, the method further comprising:
in association with each third-party license key hosted in the cloud service, hosting an indication of the license type of the corresponding global third-party license.

3. The method of claim 2, wherein the license type comprises a sub-type.

4. The method of any preceding claim, further comprising:
the cloud service receiving, from the first-party service on a particular one of the electronic devices, a license key request, the license key request comprising an electronic device identifier (ID) of the particular electronic device and an indication that a license is requested for access to the third-party service on the particular electronic device;
upon validating the license key request, the cloud service securely transmitting a particular one of the third-party license keys to the first-party service on the particular electronic device; and
on the particular electronic device, the first-party service providing the particular third-party license key to the third-party service.

5. The method of claim 4, further comprising:
the cloud service receiving the license key request from the first-party service via a device management service of the first-party vendor; and
the cloud service securely transmitting the particular third-party license key to the first-party service via the device management service, or
wherein the license key request includes a device certificate comprising a public key of the particular electronic device, and the method further comprising:
the cloud service validating the device certificate; and
the cloud service encrypting the third-party license key using the public key, such that the third-party license key can only be decrypted by a corresponding private key of the particular electronic device.

6. A method performed by a first-party vendor, the first-party vendor providing a licensed first-party service on one or more electronic devices, the first-party service being associated with a licensed third-party service provided on the one or more electronic devices by a third-party vendor, the method comprising:
storing a mapping between one or more types of first-party licenses and one or more types of third-party licenses, each first-party license for access to the first-party service, each third-party license for access to the third-party service, and the mapping having been agreed on by the first-party vendor and the third-party vendor;
determining a current affinity of a particular one of the electronic devices to a particular type of third-party license based on: (i) the mapping, and (ii) the type of first-party license that is currently associated with the particular electronic device; and
distributing a third-party license key to the particular electronic device based on the current affinity, the third-party license key pointing to a third-party license.

7. The method of claim 6, further comprising: upon determining a change in affinity of the particular electronic to a new affinity, distributing a new third-party license key to the particular electronic device, the new third-party license key pointing to a new third-party license of a type reflecting the new affinity.

8. The method of claim 6 or 7, further comprising:
determining the change in affinity of the particular electronic device based on results of a first-party license reconciliation, from which it is determined that a new type of first-party license is currently associated with the particular electronic device; or
determining the change in affinity of the particular electronic device based on a change in the mapping.

9. The method of any one of claims 6 to 8, wherein each third-party license has attributes comprising: (i) an expiry date that is unspecified or later than an expiry date of any first-party license available for issuance by the first-party vendor, (ii) a count that is unspecified or greater than a count of all first-party licenses available for issuance by the first-party vendor, and (iii) a license type, the method further comprising:
for each electronic device for which a third-party license has been activated, storing in a database of the first-party vendor information comprising an electronic device identifier (ID) identifying the electronic device, an associated third-party license key ID identifying a third-party license key pointing to a corresponding third-party license, and the license type of the corresponding third-party license.

10. The method of any one of claims 6 to 9, further comprising:
periodically receiving information from a cloud service of the first-party vendor about third-party license keys stored in the cloud service, the information for each third-party license key comprising a current value of the third-party license key ID and the license type of the corresponding third-party license; and
comparing the received third-party license key IDs to the third-party license key IDs stored in the database to determine whether any of the electronic devices should be provided with a new third-party license key.

11. A method performed at an electronic device, the method comprising:
providing, at the electronic device, access to a licensed first-party service of a first-party vendor and a licensed third-party service of a third-party vendor, the first-party service being associated with the third-party service;
the first-party service sending a license key request to a cloud service associated with the first-party vendor, the license key request comprising an indication that a license key is requested for access to the third-party service;
the first-party service receiving, in a secure transmission from the cloud service, a third-party license key pointing to a global third-party license issued by the third-party vendor for access to the third-party service, wherein the global third-party license has attributes comprising: (i) an expiry date that is unspecified or later than an expiry date of any first-party license available for issuance by the first-party vendor, and (ii) a count that is unspecified or greater than a count of all first-party licenses available for issuance by the first-party vendor;
the first-party service providing the third-party license key to the third-party service; and
the third-party service sending the third-party license key to a license infrastructure of the third-party vendor in order to activate the global third-party license for use by the electronic device.

12. The method of claim 11, wherein the attributes further comprise (iii) a license type of the third-party license, and wherein the license key request indicates the license type.

13. The method of claim 12, wherein the license key request is sent to the cloud service in response activation of the electronic device, the method further comprising:
the third-party service operating temporarily under the global third-party license;
the third-party service subsequently receiving a new third-party license key pointing to a new global third-party license having a particular third-party license type corresponding to a current affinity of the electronic device to a type of third-party license, the current affinity based on: (i) a mapping between one or more types of first-party licenses and one or more types of third-party licenses, the mapping having been agreed on by the first-party vendor and the third-party vendor, and (ii) the type of first-party license that is currently associated with the electronic device; and
the third-party service sending the new third-party license key to the license infrastructure of the third-party vendor in order to activate the new global third-party license for use by the electronic device.

14. An electronic device providing access to a licensed first-party service of a first-party vendor and a licensed third-party service of a third-party vendor, the first-party service being associated with the third-party service, the electronic device comprising:
a processor;
one or more communication interfaces over which the first-party service is able to communicate with a cloud service associated with the first-party vendor, and the third-party service is able to communicate with a license infrastructure of the third-party vendor; and
a memory storing computer executable instructions which, when executed by the processor, cause the first-party service to carry out the method of any one of claims 11 to 13.

15. A computer program which when executed by a processor of an electronic device provided with a licensed first-party service of a first-party vendor and a licensed third-party service of a third-party vendor, the first-party service being associated with the third-party service, is configured to cause the first-party service to carry out the method of any one of claims 11 to 13.
